# EUROPÄISCHE PATENTSCHRIFT

(11) **EP 0 979 742 B1**
(45) Veröffentlichungstag und Bekanntmachung des Hinweises auf die Patenterteilung: **19.05.2004**
(21) Anmeldenummer: 99114754.7
(22) Anmeldetag: 28.07.1999
(51) Int. Cl.: B60C 3/06, B60C 19/00, B60C 11/01, B60C 11/16, B60C 15/02, B60C 17/04

(54) **Luftreifen für Räder von mehrspurigen Fahrzeugen**
Tyres for wheels of multitrack vehicles
Bandage pneumatique de roues de véhicules à traces multiples

(30) Priorität: 12.08.1998 DE 19836439
(43) Veröffentlichungstag der Anmeldung: 16.02.2000
(73) Patentinhaber: DaimlerChrysler AG, 70567 Stuttgart (DE)
(72) Erfinder: Mäckle, Günther, 70619 Stuttgart (DE); Schirle, Thomas, 74613 Öhringen (DE)

(56) Entgegenhaltungen:
- EP-A- 0 729 826
- DE-A- 3 720 706
- DE-A- 3 720 788
- US-A- 3 142 326
- US-A- 4 732 194
- US-A- 5 620 538
- PATENT ABSTRACTS OF JAPAN vol. 017, no. 524 (M-1483), 21. September 1993 (1993-09-21) -& JP 05 139109 A (BRIDGESTONE CORP), 8. Juni 1993 (1993-06-08)
- PATENT ABSTRACTS OF JAPAN vol. 018, no. 358 (M-1633), 6. Juli 1994 (1994-07-06) & JP 06 092104 A (BRIDGESTONE CORP), 5. April 1994 (1994-04-05)
- PATENT ABSTRACTS OF JAPAN vol. 006, no. 178 (M-155), 11. September 1982 (1982-09-11) & JP 57 087701 A (SUMITOMO RUBBER IND LTD), 1. Juni 1982 (1982-06-01)
- PATENT ABSTRACTS OF JAPAN vol. 015, no. 501 (M-1193), 18. Dezember 1991 (1991-12-18) & JP 03 220006 A (MASATO ITO), 27. September 1991 (1991-09-27)

## Beschreibung

Die Erfindung betrifft einen Luftreifen für Räder von mehrspurigen Fahrzeugen, insbesondere Kraftfahrzeugen, gemäß dem Oberbegriff des Anspruches 1.

Luftreifen bilden für Räder von mehrspurigen Fahrzeugen die übliche Ausstattung, wobei viele Reifengrößen mit bezüglich des Verhältnisses von Höhe zu Breite durchaus unterschiedlichen Querschnittsformen im Einsatz sind und die Tendenz, auch im Sinne eines sportlichen Erscheinungsbildes, zu Reifenquerschnittsformen geht, bei denen das Verhältnis von Höhe zu Breite verhältnismäßig klein ist. Im Extrem zeigen dies Reifen von Rennfahrzeugen, die bereits ein walzenähnliches Erscheinungsbild mit sehr breiter, und im Querschnitt nahezu ebener Reifenlauffläche zeigen. Erreicht werden dadurch größere Aufstandsflächen zwischen Reifen und Fahrbahn, die mit zunehmender Radlast die Übertragung höherer Längs- und Seitenkräfte ermöglichen.

Die Größe der übertragbaren Seitenkräfte hängt auch vom Sturz des jeweiligen Rades ab, und bei mehrspurigen Radfahrzeugen wird hiervon, insbesondere bei Sonderfahrzeugen in Form sogenannter Kurvenleger, Gebrauch gemacht, aber auch bei Serienfahrzeugen durch die Ausbildung von Radaufhängungen dahingehend, dass sich beim Einfedern der Sturz geringfügig ins Negative verändert, was insbesondere in Verbindung mit bei Kurvenfahrt sich erhöhender Radlast für die kurvenäußeren Räder zu höheren übertragbaren Seitenführungskräften führt.

Der Vergrößerung des Sturzes ins Negative sind bei herkömmlichen Radaufhängungen aber durchaus enge Grenzen gesetzt, zumal in Verbindung mit sehr breiten sportlichen Reifen solche Sturzänderungen im Hinblick auf den Reifen unerwünscht sind und bezüglich der übertragbaren Führungskräfte keinen wesentlichen positiven Beitrag mehr erbringen würden, da sich mit zunehmenden Abweichungen vom Sturz Null bei im Querschnitt im wesentlichen ebener Reifenlauffläche die Größe der Berührfläche zwischen Reifen und Aufstandsfläche verringert.

Aus Patent Abstracts of Japan vol. 017, no. 524 (M-1483), 21. September 1993 (1993-02-21) -& JP 05 139109 A (Bridgestone Corp), 8. Juni 1993 (1993-06-08) ist ein Luftreifen der eingangs genannten Art bekannt, der sich hinsichtlich seiner Maße und Querschnittsform als aus zwei Reifen unterschiedlicher Größe zusammengesetzt darstellt, so dass ein der Radinnenseite und ein der Radaußenseite zugehöriger Reifenteil gegeben ist und die beiden Reifenteile bei unterschiedlichem Anteil an der Gesamtbreite der Lauffläche des Reifens über die Laufflächenbreite unterschiedliche Krümmungsradien aufweisen. Durch einen größeren Krümmungsradius des von der Radaußenseite ausgehenden Laufflächenteiles ergibt sich für diesen eine weitgehend ebene Erstreckung, während der anschließende, gegen die Radinnenseite auslaufende Laufflächenteil bei kleinerem Krümmungsradius konvex gewölbt ist. Über die anschließende Seitenwand läuft dieser Laufflächenteil in einen Reifenfuß - auch als Reifenwulst bezeichnet - aus, dessen Durchmesser kleiner ist als der der gegenüberliegenden, äußeren Seitenwand des Luftreifens zugehörige Reifenfuß. Diese unsymmetrische Gestaltung des Luftreifens soll einen gleichmäßigen Verschleiß des Reifens begünstigen und ohne Beeinträchtigung der Geradeauslaufeigenschaften des Reifens dessen Vibrationsverhalten günstig beeinflussen.

Aus der AT 255 919 ist ein weiterer Luftreifen unsymmetrischen Querschnitts bekannt, der für Räder konzipiert ist, die im Rahmen der konstruktiven Gegebenheiten bei Kraftfahrzeugen über deren Radführung im wesentlichen sturzkonstant geführt sind. Durch die Verrundung des Reifens in dem der Reifenaußenseite zugehörigen Schulterbereich in Verbindung mit über den Reifenquerschnitt sich änderndem Reifenprofil und/oder sich ändernder, auf höhere Reibwerte oder größere Abriebfestigkeit ausgelegter Laufflächengestaltung sollen Fahreigenschaften und Lebensdauer des Reifens verbessert werden. Hierzu ist der weitgehend ebene, gegen die Radinnenseite auslaufende Laufflächenteil durch starke Profilierung auf hohe Griffigkeit und durch die Verwendung eines abriebfesten Laufflächenmaterials auf hohe Laufleistungen bei Geradeausfahrt ausgelegt. Für den verrundeten, der Radaußenseite zugeordneten Laufflächenanteil ist dagegen eine geringe Profilierung mit einem einen hohen Reibwert aufweisenden Laufflächenmaterial gepaart. Dies soll zu einem günstigen Kompromiß hinsichtlich der Lauf- und Führungseigenschaften eines Reifens und dessen Verschleißfestigkeit führen.

Desweiteren ist aus der EP 0 607 784 A1 ein im Querschnitt unsymmetrisch aufgebauter Reifen bekannt, bei dem eine zur Radaußenseite hin im Durchmesser leicht zurückgenommene Oberflächenkontur vorgesehen ist, die in Anpassung an eine sturzkonstante, auf negativen Sturz ausgelegte Radaufhängung zu besseren Laufeigenschaften bei verringertem Verschleiß führen soll.

Ferner sind Luftreifen für Räder von mehrspurigen Fahrzeugen bekannt, bei denen bei im wesentlichen symmetrischer, ebener Laufflächenkontur die Seitenwände der Reifen unterschiedliche Höhe aufweisen, wobei die Höhe der der Radinnenseite zugehörigen Reifenseitenwand kleiner ist als die der Radaußenseite zugeordneten Reifenwand, und wobei, in entsprechender Weise, die Felge radinnenseitig einen größeren Durchmesser aufweist als radaußenseitig (US 3 974 870, FR 2 200 122, EP 0 607 784 A1). Sinn dieser Anordnungen ist es, für die innenseitig zum Rad vorgesehene Bremse einen größeren Bauraum zur Verfügung zu stellen.

Der Erfindung liegt die Aufgabe zugrunde, für Räder mehrspuriger Fahrzeuge einen Luftreifen zur Verfügung zu stellen, der im Hinblick auf die Bedürfnisse der Geradeausfahrt und des herkömmlichen Fahrbetriebes optimiert und zugleich in Verbindung mit einer aktiven Sturzsteuerung und/oder einer Sturzsteuerungsregelung einzusetzen ist, um unterschiedliche Laufflächenbereiche fahr- und/oder straßenzustandsabhängig in Einsatz zu bringen, so dass die in Verbindung mit Kurvenfahrten auftretenden Radlaständerungen in Form der kurvenaußenseitig auftretenden Radlasterhöhungen in entsprechende Seitenführungskräfte umgesetzt werden können, sowie auch bei Geradeausfahrt durch Einsatz jeweils eines anderen Laufflächenteiles eine Anpassung an besondere Gegebenheiten, beispielsweise Winterbetrieb erfolgen und dadurch die Fahrsicherheit auch in extremen Situationen verbessert werden kann.

Gemäß der Erfindung wird dies durch die Merkmale des Anspruches 1 erreicht, demzufolge in Verbindung mit einem ebenen Laufflächenanteil von 2/3 der gesamten Laufflächenbreite und einem gewölbten Laufflächenanteil von 1/3 die Größe des Krümmungsradius des gewölbten Laufflächenanteiles dem 1,25 bis 1,75-fachen seiner Breite entspricht.

Eine derartige Auslegung des Reifens ermöglicht für die kurvenäußeren Räder einen negativen Sturz von etwa 20°. Entsprechend dieser Auslegung wird bevorzugt der gewölbte, der Fahrzeuglängsmitte zugewandte, innere Laufflächenbereich so bemessen, dass, bezogen auf den Querschnitt, die gewölbte Lauffläche eine Mittel- oder Symmetrieebene aufweist, die unter einem Winkel von etwa 20° zu einer Radialebene nach oben und außen geneigt liegt und die die im Übergang zwischen ebenem und gewölbten Laufflächenteil liegende Radialebene im Mittelpunkt der Krümmung, insbesondere des Krümmungskreises des gewölbten Laufflächenteiles schneidet.

Für den konvex gewölbten Laufflächenanteil erweist sich eine kreisbogenförmige Kontur als zweckmäßig, und zwar bei verlaufendem Übergang des ebenen Laufflächenteiles in den gewölbten, der Fahrzeugmitte zugewandten Laufflächenteil. Der Krümmungsradius des gewölbten Laufflächenteils ist dabei bevorzugt größer als seine Breite, so dass der gewölbte Laufflächenteil relativ flach gewölbt ist und in Annäherung parabelförmigen Verlauf aufweisen kann. Bevorzugt liegt die Größe des Krümmungsradius des gewölbten Laufflächenteils im Bereich von etwa 5/4 bis 7/4 der Breite dieses Laufflächenteiles.

Bezogen auf die gesamte Laufflächenbreite liegt der Krümmungsradius des gewölbten Laufflächenteils bevorzugt im Bereich von etwa 1/3 bis 1/2.

Im Verhältnis zur Reifenhöhe ist der Krümmungsradius des gewölbten Laufflächenteiles bevorzugt größer, wobei der Krümmungsmittelpunkt bevorzugt etwa im Bereich der Radialebene des Reifens liegt, in der der ebene Laufflächenteil in den gewölbten Laufflächenteil übergeht.

Für den gewölbten Laufflächenteil liegt bevorzugt die Reifenschulter gegenüber der an den ebenen Laufflächenteil angrenzenden Reifenschulter radial nach innen versetzt, wobei dieser Radialversatz bezogen auf die Reifenhöhe im Bereich der jeweiligen Reifenschulter etwa 1/6 bis 1/3 ausmacht.

Entsprechend den Reifenschultern kann im Rahmen der Erfindung das den Reifen tragende Rad mit entsprechendem radialem Versatz seiner Felgenschultern ausgebildet sein, so daß auch auf der Radinnenseite eine der Radaußenseite entsprechende Reifenhöhe zumindest in Annäherung realisierbar ist.

Das Stürzen des Reifens derart, daß er auf seinem gewölbten, der Radinnenseite zugeordneten Laufflächenteil abläuft, hat bezüglich senkrecht zur Fahrbahn wirkender Kräfte zur Folge, daß diese den Reifen unter einem dem eingestellten negativen Sturz entsprechenden Winkel beaufschlagen und damit bezogen auf die Abstützung des Reifens über die Felge einen hohen Querkraftanteil zur Folge haben. Da der Reifen insgesamt vielen und sehr unterschiedlichen Belastungsbedingungen gerecht werden muß, aber im Hinblick auf Komfort, Fahrverhalten und dergleichen dennoch den gewohnten Standards im wesentlichen entsprechen muß, kann es Schwierigkeiten bereiten, einen so hohen Querkraftanteil in der Reifenstruktur abzufangen, ohne unerwünschte Formänderungen desselben hinnehmen zu müssen.

Im Rahmen der Erfindung kann es sich deshalb als zweckmäßig erweisen, dem Reifen im Bereich seines gewölbten Laufflächenteiles einen bei nicht gestürztem Rad zur Reifeninnenfläche beabstandet liegenden, über die den Reifen tragende Felge des Rades gehaltenen Abstützring zuzuordnen, der solche unerwünschten Verformungen des Reifens begrenzt und gegebenenfalls als zusätzlicher Tragring in Einsatz kommt. Unter diesem Aspekt erweist es sich als besonders zweckmäßig, wenn der Abstand zwischen Reifen und Abstützring in der Ausgangslage dem als zulässig erachteten Verformungsweg entspricht und/oder wenn die der Reifeninnenfläche zugewandte Kontur des Abstützringes einen der angestrebten Reifenkontur entsprechenden Konturverlauf zeigt.

Wird der Abstützring teilweise elastisch ausgebildet, wobei die elastische Ausbildung insbesondere für eine dem Reifen zugewandte Auflage des Abstützringes in Frage kommt, so ist es zweckmäßig, deren Elastizität und/oder Verformungsverhalten im Sinne des vorgeschilderten konstruktiven Zweckes auszulegen, wobei sich zwischen Reifeninnenfläche und Abstützring entsprechend dem elastischen Verformungsverhalten desselben, in der Ausgangslage auch Ausbildungen und Abstände zur Reifeninnenfläche als notwendig und zweckmäßig erweisen können, die in der Ausgangslage vom vorgeschilderten abweichende Verläufe haben.

Eine erfindungsgemäße Reifenausbildung, bei der durch aktive Sturzsteuerung der der Radinnenseite zugewandte, gewölbte Laufflächenteil zum Einsatz gebracht werden kann, um z.B. im Winterbetrieb durch Sturzstellung des Reifens eine Winterlauffläche in Einsatz zu bringen, bietet auch die Möglichkeit der Spikeanordnung in diesem gewölbten Laufflächenteil, da im normalen Fahrbetrieb - nicht gestürztes Rad - dieser Laufflächenteil nicht zum Tragen kommt und die Umstellung auf diesen Laufflächenteil unter dem Gesichtspunkt der Traktionserhöhung bei Geradeausfahrt nur für Extremfälle in Frage kommt. In Verbindung mit der Verwendung eines Abstützringes bietet sich erfindungsgemäß darüber hinaus die Möglichkeit der versenkten Spikeanordnung, derart, daß die Spikes, bei gestürztem Rad und sich gegen den Abstützring abstützendem gewölbten Laufflächenteil, über den Abstützring in eine Arbeits- und Eingriffsstellung gedrückt werden, in der sie ausgefahren sind.

Die erfindungsgemäße Reifenausgestaltung bietet damit vielseitige Ansätze im Hinblick auf die Verwendung unterschiedlicher Profile, unterschiedlicher Laufflächenmaterialien und dergleiche, wobei ein besonderer Vorteil auch darin besteht, auch das Aquaplaning-Verhalten des Fahrzeuges durch Sturzstellung des Rades und in Einsatz bringen des gewölbten Laufflächenanteiles zu verbessern.

Weitere Einzelheiten und Merkmale der Erfindung ergeben sich aus den Patentansprüchen. Ferner wird die Erfindung im folgenden anhand stark schematisierter Ausführungsbeispiele näher erläutert. Es zeigen:
- Figur 1: im Querschnitt, und nur teilweise dargestellt, die Grundanordnung eines luftbereiften Rades mit einem erfindungsgemäßen Reifen bei Konstruktionsstellung des Rades für die Geradeausfahrt,
- Figur 2: eine der Figur 1 entsprechende Darstellung, aber bei stark ins negative gestürztem Rad,
- Figur 3: eine vergrößerte, schematisierte Darstellung des selben Bereiches eines Rades mit aufgezogenem Reifen in erfindungsgemäßer Ausgestaltung,
- Figur 4: einen Ausschnitt eines Rades mit einem Reifen in erfindungsgemäßer Ausgestaltung bei der Geradeausfahrt entsprechender Grundstellung des Rades mit im gewölb- ten, der Radinnenseite zugeordneten Laufflächenteil vorgesehenem Abstützring,
- Figur 5: eine der Figur 4 entsprechende Darstellung bei leicht ins Negative gestürztem Rad und mit Anordnung von versenkt liegenden Spikes im gewölbten, in Winterprofil aufweisenden Laufflächenteil, und
- Figur 6: eine der Figur 5 entsprechende Darstellung bei voll ins Negative gestürztem Rad, Abstützung des gewölbten Laufflächenteiles über den Abstützring und über den Abstützring im Aufstandsbereich des Reifens beaufschlagten und nach außen, also in Eingriffsstellung gedrückten Spikes.

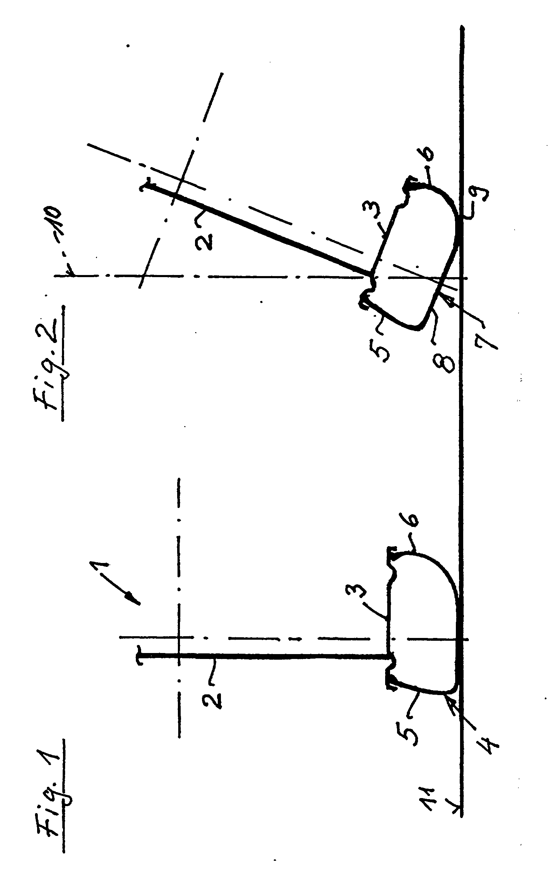

Die Darstellung gemäß Figuren 1 und 2 bezieht sich auf ein mehrspuriges Fahrzeug, insbesondere ein Fahrzeug, bei dem einer Achse des Fahrzeuges zwei gegenüberliegenden Fahrzeugseiten zugehörige, luftbereifte Räder zugeordnet sind, von denen hier ausschnittsweise das bezogen auf die Fahrtrichtung linksseitige in Rückansicht schematisiert veranschaulicht ist.

Im Einzelnen ist mit 1 das Rad bezeichnet, dessen Radscheibe mit 2 und dessen die Radscheibe 2 umschließende Felge mit 3. Die Felge 3 trägt den Reifen 4, der als schlauchloser Reifen oder als Luftreifen mit Schlauch ausgebildet ist.

Bezogen auf die geschilderte Anordnung des den Reifen 4 tragenden Rades 1 am Fahrzeug ist die Radscheibe 2 zur Felge 3 zur Rad- bzw. Fahrzeugaußenseite hin versetzt und es bildet die Seitenwand 5 des Reifens eine außenliegende Seitenwand, während die Seitenwand 6 des Reifens 4 auf der der Fahrzeugmitte zugewandten Innenseite vorgesehen ist. Zwischen der äußeren und inneren Seitenwand 5 bzw. 6 verläuft die Lauffläche des Reifens, die insgesamt mit 7 bezeichnet ist und die einen an die äußere Seitenwand 5 angrenzenden ebenen Laufflächenteil 8 und einen der inneren Seitenwand 6 benachbarten gewölbten Laufflächenteil 9 umfaßt. Die Seitenwände 5 und 6 können erfindungsgemäß, wie in Figur 3 angedeutet, nicht nur unterschiedliche Höhe, sondern auch unterschiedliche Krümmung aufweisen, so etwa einen nahezu geradlinigen Verlauf für die Seitenwand 5 und einen stärker gekrümmten Verlauf für die kürzere Seitenwand 6, um beispielsweise eine härtere oder weichere Seitenwandabstützung zu erreichen.

Für die Darstellung des Rades 1 mit Reifen 4 ist in Figur 1 davon ausgegangen, daß der Sturz des Rades, also die Neigung des Rades zu einer lotrechten Bezugsebene - 10 in Figur 2 - in der Konstruktionslage im Bereich um 0° liegt, das Rad 1 also aufrecht steht und über die ebene Lauffläche 8 auf der Fahrbahn 11 abgestützt ist. Der gewölbte Laufflächenteil 9 liegt, bezogen auf diese konstruktive Ausgangslage, zumindest im wesentlichen frei von der Fahrbahn 11.

In der Darstellung gemäß Figur 2 ist das Rad 1 mit dem Reifen 4 zur lotrechten Bezugsebene 10 geneigt, d.h. mit negativem Sturz angeordnet, wobei hier ein Sturzwinkel in der Größenordnung von 20° angedeutet ist. Derartige Sturzwinkel lassen sich in Verbindung mit einer aktiven Sturzsteuerung bei Fahrzeugen realisieren und ermöglichen in Verbindung mit der erfindungsgemäßen Reifengestaltung hohe Seitenführungskräfte an den jeweils kurvenäußeren Rädern. In Verbindung mit einem Sturz dieser Größe kommt der gewölbte Laufflächenteil 9 zur Abstützung gegenüber der Fahrbahn 11, wobei erfindungsgemäß die Wölbung derartig gewählt ist, daß bezogen auf die jeweils gegebenen Radaufstandskräfte die Berührflächen zwischen Lauffläche und Fahrbahn 11 etwa gleich groß sind.

Ferner ist der Reifen, wie insbesondere Figur 3 verdeutlicht, bezogen auf die jeweilige Radaufhängung bevorzugt so gestaltet, daß die Halbierenden 26 und 27 der jeweiligen Laufflächenteile 9 bzw. 8, und dementsprechend die Radaufstandspunkte bei gestürztem und ungestürztem Rad zur Fahrbahn 11 etwa gleiche Lage haben, so daß die Verhältnisse bezüglich der Einleitung der Radaufstandskräfte in die Radaufhängung etwa gleich bleiben.

Im Vergleich zum großen negativen Sturz der kurvenäußeren Räder sind die kurveninneren Räder bei Kurvenfahrt wesentlich weniger gestürzt und auch wesentlich geringer belastet.

Figur 3 zeigt in vergrößertem Maßstab, aber ebenfalls schematisiert, den Reifen 4 mit dem anschließenden, durch die Felge 3 gebildeten Teil des Rades. Auch wenn diese Darstellung keineswegs maßstäblich ist, so gibt sie doch Größenverhältnisse wieder, wie sie mit Vorteil für die Praxis zu nutzen sind.

Der Reifen 4 weist bei einem Reifendurchmesser von etwa 650-700 mm im Ausführungsbeispiel einen ebenen Laufflächenteil 8 auf, dessen Breite 12 etwa bei 160 bis 170 mm liegt. An diesen ebenen Laufflächenteil schließt der gewölbte Laufflächenteil 9 an, dessen Breite 13 in der Größenordnung von 100 mm liegt. Bei einer Breite 13 des konvex gewölbten Laufflächenteiles 9 in der vorgenannten Größenordnung von etwa 100 mm liegt der radiale Versatz 14 des gewölbten Laufflächenteiles 9 zwischen dessen Anschluß an den ebenen Laufflächenteil 8 und dessen Übergang in die Seitenwand 6 in der Größenordnung von etwa 40 mm, wobei der Übergangsbereich zwischen dem gewölbten Laufflächenteil 9 und der äußeren Seitenwand 6 durch die Reifenschulter 15 gebildet ist. Die radiale Höhe 16 der Seitenwand 6, die sich über den Reifenfuß 17 benachbart zum Felgenhorn 18 auf der Felge 6 abstützt, liegt in der Größenordnung von 80 mm. Die gegenüberliegende, innere Seitenwand 5 des Reifens 4 weist eine radiale Höhe 19 in der Größenordnung von 100 mm auf und ist über den Reifenfuß 20 benachbart zum Felgenhorn 21 auf der Felge 3 abgestützt, wobei die den Reifenfuß 20 tragende Felgenschulter 22 gegenüber der den Reifenfuß 17 tragenden Felgenschulter 23 in diesem Ausführungsbeispiel radial versetzt ist. Die Felgenschulter 23 ist gegenüber der Felgenschulter 22 entsprechend der Krümmung des gewölbten Laufflächenteiles 9 nach radial innen versetzt, wobei der radiale Versatz 24 zwischen den Felgenschultern 22 und 23 in der Größenordnung von etwa 20 mm liegt.

Der Übergang zwischen dem ebenen Laufflächenteil 8 und dem konvex gewölbten Laufflächenteil 9 erfolgt verlaufend und ist in der Darstellung gemäß Figur 3 durch die Radialebene 24 angedeutet, die zur Fahrbahn 11 - bei der gezeigten Anordnung mit Abstützung des Reifens 4 gegenüber der Fahrbahn 11 über den ebenen Laufflächenteil 8 - lotrecht oder nahezu lotrecht steht, entsprechend dem konstruktiv in der Normallage des Rades gegebenen Sturz.

Für den gewölbten Laufflächenteil 9 mit konvexer Wölbung liegt der Mittelpunkt des Krümmungsradius in Richtung der nicht gezeigten Radachse auf der Radialebene 24, wobei der Krümmungsradius in seiner Größe zumindest etwa der Breite 13 des gewölbten Laufflächenteiles 9 entspricht oder größer ist. Im Ausführungsbeispiel ist der Krümmungsradius etwa 1,4 mal größer, und er liegt allgemein bevorzugt, bezogen auf die Breite 13 des gewölbten Laufflächenteils 9, in der Größenordnung von 1,1 bis 1,4.

Im Ausführungsbeispiel gemäß Figur 3 ist über die unter einem Winkel von 20° zur Radialebene 24 angeordnete, zum Laufflächenteil 9 lotrechte Halbierende 26 der Laufflächenbereich des gewölbten Laufflächenteiles 9 angezeigt, in dem sich der Laufflächenteil 9 bei entsprechend gestürztem Rad auf der Fahrbahn 25 abstützen würde.

In Figur 3 ist weiter durch die Radialebene 27 bezogen auf den gezeigten Querschnitt die Mitte des ebenen Laufflächenteils 8 angedeutet, in dem sich der Reifen 4 in der Normallage, also bei nicht gestürztem Rad, einer der konstruktiven Grundstellung des Rades entsprechenden Radstellung und Geradeausfahrt auf der Fahrbahn 11 abstützt. Figur 3 läßt damit erkennen, daß bei Kurvenfahrt und negativem Sturz der kurvenäußeren Räder entsprechend dem Ausführungsbeispiel gemäß Figur 3 eine Verlagerung der Reifenaufstandsfläche in den Bereich des gewölbten, seitlich inneren Laufflächenteiles 9 erfolgt, der dann auf der Fahrbahn 11 aufliegt, so daß sich bei gestürztem und nicht gestürztem Rad eine in Annäherung gleiche Lage des Radaufstandspunktes zur Fahrbahn 11 ergibt.

In weiterer Ausgestaltung der Erfindung kann, was nicht dargestellt ist, auch an der Radaußenseite im Übergang zwischen Seitenwandbereich und ebenem Laufflächenteil ein gewölbter Laufflächenteil vorgesehen sein, der im Hinblick auf die Verhältnisse am kurveninneren Rad aber einen weit geringeren Krümmungsradius aufweist als der gewölbte, radinnenseitig vorgesehene Laufflächenteil. Erfindungsgemäß kann es weiter vorteilhaft und zweckmäßig sein, den einzelnen Laufflächenteilen Gummimischungen bzw. Profile zuzuordnen, die auf die jeweiligen Beanspruchungen abgestimmt sind. So erweist es sich als vorteilhaft, dem ebenen Laufflächenteil 8, auch im Hinblick auf desen größeren Nutzzeitanteil, eine Gummimischung zuzuordnen, die im Hinblick auf hohe Laufleistungen relativ hart ist, insbesondere in Verbindung mit einem Profil, das besonders für Geradeausfahrt geeignet ist, wobei für Geradeausfahrt erfindungsgemäß ein extrem niedriger Rollwiderstand angestrebt werden kann, da das maximale Kraftübertragungspotential erfindungsgemäß durch Nutzung des gewölbten Laufflächenteiles in Einsatz gebracht werden kann. Für den gewölbten Laufflächenteil 9 erweist sich demgegenüber eine Gummimischung als vorteilhaft, die relativ weich ist und einen besonders guten Straßenkontakt mit sehr hoher Kraftübertragung gewährleistet. Entsprechend ist auch die Profilierung dieses Laufflächenteiles 9 zu gestalten, wobei dieser Laufflächenteil auch nahezu profillos ausgebildet sein kann.

Von den durch die Wahl des Laufflächengemisches und/oder der Profilierung im wesentlichen bestimmten Unterschieden in den Kraftschlußbeiwerten kann in Verbindung mit der erfindungsgemäßen Reifengestaltung erfindungsgemäß auch Gebrauch gemacht werden, um für den üblichen Fahrbetrieb und für extreme Fahrsituationen, so beispielsweise Vollbremsungen jeweils unterschiedliche "Reifenqualitäten" in Ansatz zu bringen. Dies ist dadurch möglich, daß eine aktive Umstellung des Sturzes nicht nur für die Kurvenfahrt, sondern beispielsweise auch für den Bremsbetrieb vorgesehen wird. Für diesen Fall ist es gegebenenfalls möglich und auch zweckmäßig, die Räder des Fahrzeuges sämtlich auf maximalen Sturz zu stellen, so daß eine entsprechende Spurverbreiterung sich einstellt und jeweils die gewölbten Laufflächenteile 9 mit der zugehörigen Laufflächenmischung in Ansatz kommen.

Im Sinne einer angesprochenen Sturzverstellung für sämtliche Räder des Fahrzeuges kann es auch zweckmäßig sein, den gewölbten Laufflächenteil 9 gegebenenfalls mit einem Winterprofil oder Spikes auszurüsten und durch entsprechende Sturzverstellung diesen Laufflächenteil fahrzustands- oder straßenzustandsbedingt in Einsatz zu bringen, wobei die Umstellung gesteuert in Abhängigkeit von beispielsweise durch andere Systeme des Fahrzeuges erfaßte und/oder verarbeitete Werte automatisiert erfolgen kann, oder auch durch den Fahrer betätigt.

Die Figuren 4 bis 6 zeigen Ausgestaltungen des erfindungsgemäßen Luftreifens mit einem gleichen Grundaufbau, weswegen für entsprechende Teile gleiche Bezugszeichen Verwendung finden können und desweiteren auf die vorhergehende Beschreibung verwiesen werden kann.

Ergänzend ist in den Ausführungsbeispielen gemäß Figuren 4 bis 6 dem gewölbten Laufflächenteil 9, der radinnenseitig vorgesehen ist, ein Abstützring 30 zugeordnet, der in dem dem gewölbten Laufflächenteil 9 zugeordneten, der Radinnenseite zugewandten Bereich 31 der Felge 3 abgestützt ist.

Der Abstützring 30 weist einen offen oder geschlossen ausgebildeten, radial inneren Stegbereich 32 auf, der einen geschlossenen radial äußeren Ring 33 trägt, welcher eine der Reifeninnenfläche 34 zugewandte Kontur 35 aufweist, die so gestaltet ist, daß sie bei ins Negative gestürztem Rad und gegen den Abstützring 30 anliegendem gewölbten Laufflächenteil 9 dem gewölbten Laufflächenteil 9 eine Kontur aufprägt, die für den gewölbten Laufflächenteil 9, insbesondere bei dessen Einsatz für Geradeausfahrt des Fahrzeuges, angestrebt wird. Der die Kontur 35 bestimmende Auflagebereich kann bezogen auf die aufzunehmenden Belastungen im wesentlichen unverformbar sein oder auch, was eine bevorzugte Lösung darstellt, aus elastisch verformbarem Material bestehen, wobei die Gestaltung einer elastischen Auflage derart erfolgt, daß sich unter Berücksichtigung der Belastungen die angestrebte Kontur für die Radaufstandsfläche bei gewünschter Pressungsverteilung ergibt. Die Auflage kann im Rahmen der Erfindung statt auf dem Stützring auch auf der Innenfläche des Reifens aufgetragen sein, gegebenenfalls zwischen Stützring und Reifen auch aufgeteilt sein.

Bevorzugt ist im Rahmen der Erfindung bezogen auf die Grundstellung des Rades 1 gemäß Figur 4 zwischen der Kontur 35 des Abstützringes 30 und der Innenfläche 34 des Reifens4 ein Abstand gegeben, der einen Freigang des Reifens 4 gegenüber dem Abstützring 30 gewährleistet.

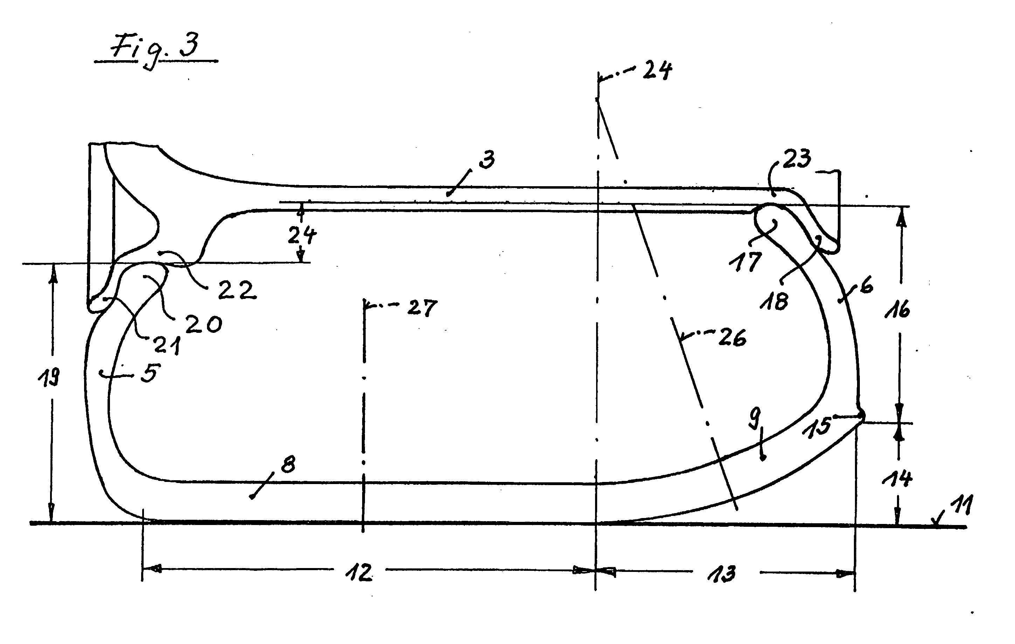

Figur 5 zeigt in weiterer Ausgestaltung, daß der gewölbte Laufflächenteil 9 ein Winterprofil aufweisen kann, und daß es sich als zweckmäßig erweisen kann, diesem Laufflächenteil insbesondere bei Winterprofil, aber auch bei anderweitiger Profilierung Spikes 36, oder auch anderweitige Anfahrhilfen anzuordnen, und zwar bevorzugt, wie in Figur 5 für die Spikes 36 angedeutet, versenkt.

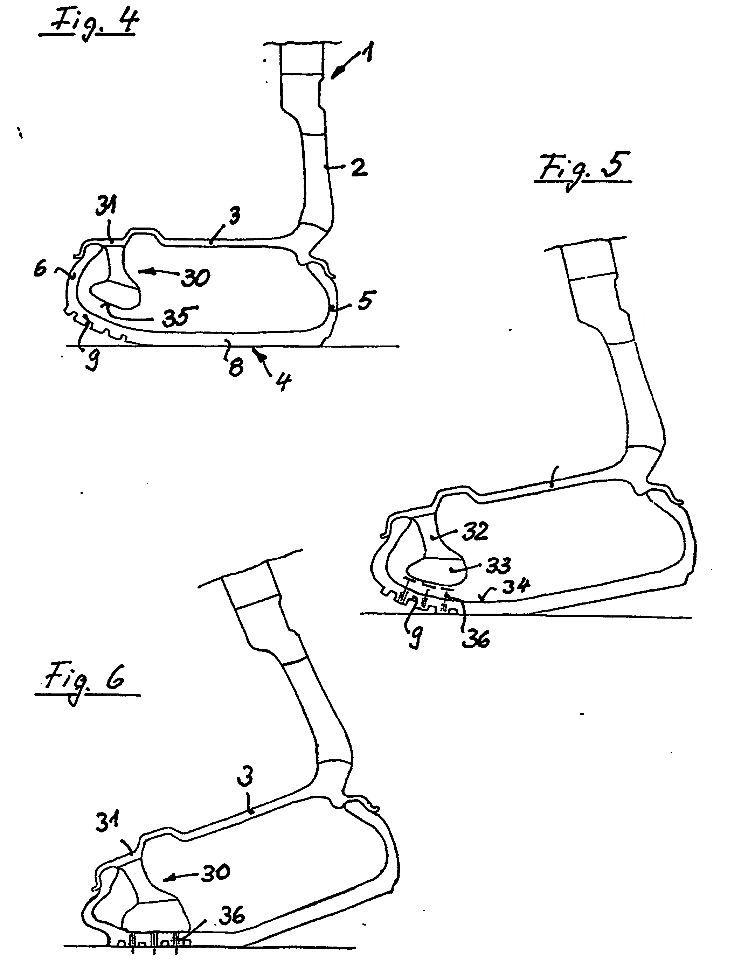

Wird ausgehend von dieser Grundsituation, wie in Figur 6 dargestellt, das Rad 1 weiter gestürzt und kommt der gewölbte Laufflächenteil 9 dadurch voll in Auflage gegenüber der Fahrbahn, so bildet der Abstützring 30 auch eine Abstützung für die als Anfahrhilfen vorgesehenen Elemente, also insbesondere die Spikes 36 und drängt diese in eine ausgefahrene Arbeitsstellung.

Im Rahmen der Erfindung ist es somit möglich, einen Luftreifen 4 zur Verfügung zu stellen, der auch im Hinblick auf besondere Fahrsituationen vielfältige Variationsmöglichkeiten bietet und der dadurch geeignet ist, unterschiedlichsten Fahr- und Einsatzbedingungen gerecht zu werden.

## Patentansprüche

1. Luftreifen für Räder (1) von mehrspurigen Fahrzeugen, insbesondere Kraftfahrzeugen, mit den Reifenumfang bildender Lauffläche (7), die über seitlich anschließende Reifenschultern in Seitenwände (5, 6) des Reifens (4) übergeht, welche radial innen in jeweils einem auf der Radfelge (3) befestigbaren Reifenfuß (17, 20) auslaufen, wobei, im Querschnitt, der Reifen (4) unsymmetrisch ausgebildet ist und die Lauffläche (7) ausgehend von dem Bereich der einen Seitenwand (5) einen annähernd ebenen Laufflächenteil (8) aufweist, der verlaufend in einen schmäleren, gegen den Bereich der anderen Seitenwand (6) konvex gewölbten, radial nach innen verlaufenden Laufflächenteil (9) übergeht, wobei der gewölbte Laufflächenteil (9) der Radinnenseite zugeordnet ist und bei ins Negative gestürztem Rad (1) den gegenüber der Fahrbahn (11) tragenden Laufflächenteil (9) bildet, die Lauffläche (7) in ihrer Breite zu etwa 2/3 durch den ebenen Laufflächenteil (8) zu etwa 1/3 durch den gewölbten Laufflächenteil (9) gebildet ist und wobei der gewölbte Laufflächenteil (9) einen Krümmungsradius aufweist, der größer ist als seine Breite (13),
**dadurch gekennzeichnet,**
**dass** die Größe des Krümmungsradius des gewölbten Laufflächenteiles (9) dem 1,25 bis 1,75-fachen seiner Breite (13) entspricht.

2. Luftreifen nach Anspruch 1,
**dadurch gekennzeichnet,**
**dass** der Krümmungsradius des gewölbten Laufflächenteiles (9) etwa dem 1,5fachen seiner Breite (13) entspricht.

3. Luftreifen nach Anspruch 1 oder 2,
**dadurch gekennzeichnet,**
**dass** der gewölbte Laufflächenteil (9) einen Krümmungsradius aufweist, dessen Länge etwa 1/3 bis 1/2 der gesamten Laufflächenbreite entspricht.

4. Luftreifen nach einem der vorhergehenden Ansprüche,
**dadurch gekennzeichnet,**
**dass** der Krümmungsradius des gewölbten Laufflächenteiles (9) größer ist als die Reifenhöhe.

5. Luftreifen nach einem der vorhergehenden Ansprüche,
**dadurch gekennzeichnet,**
**dass** der Krümmungsmittelpunkt des gewölbten Laufflächenteiles (9) im Bereich einer im Übergang zwischen dem ebenen Laufflächenteil (8) und dem gewölbten Laufflächenteil (9) aufgespannten Radialebene (24) liegt.

6. Luftreifen nach einem der vorhergehenden Ansprüche,
**dadurch gekennzeichnet,**
**dass** der Reifenfuß (17) der dem gewölbten Laufflächenteil (9) zugeordneten Seitenwand (6) gegenüber dem Reifenfuß (20), der der an den ebenen Laufflächenteil (8) angrenzenden Seitenwand (5) zugeordnet ist, radial nach innen versetzt ist.

7. Luftreifen nach Anspruch 6,
**dadurch gekennzeichnet,**
**dass** der Radialversatz (24) der Reifenfüße (17, 20) etwa 1/6 bis 1/12 der Reifenbreite entspricht.

8. Luftreifen nach Anspruch 6 oder 7,
**dadurch gekennzeichnet,**
**dass** der Radialversatz (24) der Reifenfüße (17, 20) etwa 1/6 bis 1/3 der über einer Felgenschulter (22 bzw. 23) gemessenen Reifenhöhe (19 bzw. 16) entspricht.

9. Luftreifen nach einem der vorhergehenden Ansprüche,
**dadurch gekennzeichnet,**
**dass** das den Reifen (4) tragende Rad den Reifenfüßen (17, 20) entsprechend radial versetzte Felgenschultern (18, 21) aufweist.

10. Luftreifen nach einem der vorhergehenden Ansprüche,
**dadurch gekennzeichnet,**
**dass** der gewölbte Laufflächenteil (9) des Reifens (1) ein Winterprofil aufweist.

11. Luftreifen nach einem der vorhergehenden Ansprüche,
**dadurch gekennzeichnet,**
**dass** der gewölbte Laufflächenteil (9) des Reifens (4) mit Spikes (36) versehen ist.

12. Rad mit einem Luftreifen nach einem der vorhergehenden Ansprüche,
**dadurch gekennzeichnet,**
**dass** das Rad (1) einen von seiner Felge (3) getragenen Abstützring (30) aufweist, der im Bereich des gewölbten Laufflächenteiles (9) des Reifens (4) und, bei nicht gestürztem Rad (1), zur Reifeninnenfläche (34) beabstandet liegt.

13. Rad nach Anspruch 12,
**dadurch gekennzeichnet,**
**dass** der Abstand zwischen Reifeninnenfläche (34) und dieser zugewandter Fläche des Abstützringes (30) bei nicht gestürztem Rad (1) etwa dem Verformungsweg des Reifens (4) im Bereich von dessen gewölbtem Laufflächenteil (9) entspricht, der sich durch Stürzen des Rades (1) für den gewölbten Laufflächenteil (9) im Aufstandsbereich des Rades (1) ergibt.

14. Rad nach Anspruch 12 oder 13,
**dadurch gekennzeichnet,**
**dass** der Abstützring (30) teilweise elastisch ausgebildet ist.

15. Rad nach Anspruch 14,
**dadurch gekennzeichnet,**
**dass** der Abstützring (30) eine elastische, der Reifeninnenfläche (34) benachbarte Auflage aufweist.

16. Rad nach Anspruch 11,
**dadurch gekennzeichnet,**
**dass** die im gewölbten Laufflächenteil (9) des Reifens (4) angeordneten Spikes (36) eine zur Außenfläche des gewölbten Laufflächenteiles (9) versenkte Ruhelage aufweisen und über den Abstützring (30) bei Abstützung der Reifeninnenfläche gegen den Abstützring (30) in ihre Arbeitsstellung ausfahrbar sind.

## Claims

1. Pneumatic tyre for wheels (1) of multi-track vehicles, in particular motor vehicles, with a tread (7) forming the circumference of the tyre and passing into sidewalls (5, 6) of the tyre (4) via laterally adjacent tyre shoulders, the sidewalls extending radially inwardly into a respective tyre bead (17, 20) which can be fastened to the wheel rim (3), wherein, in cross-section, the tyre (4) is designed asymmetrically and the tread (7), proceeding from the region of the one sidewall (5), has a virtually flat tread part (8) which passes into a narrower tread part (9) which is convexly curved towards the region of the other sidewall (6) and extends radially inwardly, wherein the curved tread part (9) is associated with the inside of the wheel and, when the wheel (1) is negatively cambered, forms the tread part (9) which is load-bearing relative to the road (11), about 2/3 of the width of the tread (7) is formed by the flat tread part (8) and about 1/3 is formed by the curved tread part (9) and wherein the curved tread part (9) has a radius of curvature which is greater than its width (13), **characterised in that** the size of the radius of curvature of the curved tread part (9) corresponds to 1.25 to 1.75 times its width (13).

2. Pneumatic tyre according to claim 1, **characterised in that** the radius of curvature of the curved tread part (9) corresponds to about 1.5 times its width (13).

3. Pneumatic tyre according to claim 1 or 2, **characterised in that** the curved tread part (9) has a radius of curvature, the length of which corresponds to about 1/3 to 1/2 of the total tread width.

4. Pneumatic tyre according to any one of the preceding claims, **characterised in that** the radius of curvature of the curved tread part (9) is greater than the height of the tyre.

5. Pneumatic tyre according to any one of the preceding claims, **characterised in that** the centre of curvature of the curved tread part (9) lies in the region of a radial plane (24) extending in the transition between the flat tread part (8) and the curved tread part (9).

6. Pneumatic tyre according to any one of the preceding claims, **characterised in that** the tyre bead (17) of the sidewall (6) associated with the curved tread part (9) is offset radially inwardly relative to the tyre bead (20) which is associated with the sidewall adjacent to the flat tread part (8).

7. Pneumatic tyre according to claim 6, **characterised in that** the radial offset (24) of the tyre beads (17, 20) corresponds to about 1/6 to 1/12 of the tyre width.

8. Pneumatic tyre according to claim 6 or 7, **characterised in that** the radial offset (24) of the tyre beads (17, 20) corresponds to about 1/6 to 1/3 of the tyre height (19 and 16) measured above a rim shoulder (22 and 23).

9. Pneumatic tyre according to any one of the preceding claims, **characterised in that** the wheel carrying the tyre (4) has rim shoulders (18, 21) which are radially offset corresponding to the tyre beads (17, 20).

10. Pneumatic tyre according to any one of the preceding claims, **characterised in that** the curved tread part (9) of the tyre (1) has a winter tread profile.

11. Pneumatic tyre according to any one of the preceding claims, **characterised in that** the curved tread part (9) of the tyre (4) is provided with spikes (36).

12. Wheel with a pneumatic tyre according to any one of the preceding claims, **characterised in that** the wheel (1) has a support ring (30) carried by its rim (3), the support ring (30) being located in the region of the curved tread part (9) of the tyre (4) and, when the wheel (1) is not cambered, being spaced from the inner face (34) of the tyre.

13. Wheel according to claim 12, **characterised in that** the spacing between the inner face (34) of the tyre and the face of the support ring (30) facing it, when the wheel (1) is not cambered, corresponds approximately to the deformation path of the tyre (4) in the region of its curved tread part (9) arising owing to cambering of the wheel (1) for the curved tread part (9) in the ground contact area of the tyre (1).

14. Wheel according to claim 12 or 13, **characterised in that** the support ring (30) is at least partly elastic in design.

15. Wheel according to claim 14, **characterised in that** the support ring (30) has an elastic support adjacent to the inner face (34) of the tyre.

16. Wheel according to claim 11, **characterised in that** the spikes (34) arranged in the curved tread part (9) of the tyre (4) have a rest position which is recessed with respect to the outer face of the curved tread part (9) and can be drawn out into their operating position via the support ring (30) when the inner face of the tyre is supported against the support ring (30).

## Revendications

1. Pneumatique pour des roues (1) de véhicules à traces multiples, en particulier de véhicules automobiles, comportant une bande de roulement (7) qui forme le pourtour du pneumatique et qui se transforme en parois latérales (5, 6) du pneumatique via des épaulements de pneumatique qui s'y raccordent latéralement, lesdites parois se terminant radialement à l'intérieur par un talon de pneumatique respectif (17, 20) fixé sur la jante (3) de la roue, le pneumatique (4) présentant une section transversale asymétrique et la bande de roulement (7) présentant une partie (8) approximativement plane partant de la zone de l'une des parois latérales (5), qui se transforme en une partie de bande de roulement (9) plus étroite, s'étendant radialement vers l'intérieur et bombée sous forme convexe vers la zone de l'autre paroi latérale (6), la partie de bande de roulement bombée (9) étant associée au côté intérieur de la roue et formant la partie de bande de roulement (9) portante par rapport à la chaussée (11) en cas de carrossage négatif de la roue (1), et la bande de roulement (7) est formée, quant à sa largeur, pour environ 2/3 par la partie plane (8) de la bande de roulement et pour environ 1/3 par la partie bombée (9) de la bande de roulement, la partie bombée (9) de bande de roulement présente un rayon de courbure qui est supérieur à sa largeur (13),
**caractérisé en ce que**
la taille du rayon de courbure de la partie bombée (9) de la bande de roulement correspond à une valeur de 1,25 à 1,75 fois sa largeur (13).

2. Pneumatique selon la revendication 1, **caractérisé en ce que** le rayon de courbure de la partie bombée (9) de la bande de roulement correspond à environ 1,5 fois sa largeur (13).

3. Pneumatique selon l'une ou l'autre des revendications 1 et 2, **caractérisé en ce que** la partie bombée (9) de la bande de roulement présente un rayon de courbure dont la longueur correspond à une valeur d'environ 1/3 à 1/2 de la totalité de la largeur de la bande de roulement.

4. Pneumatique selon l'une des revendications précédentes, **caractérisé en ce que** le rayon de courbure de la partie bombée (9) de la bande de roulement est supérieur à la hauteur du pneumatique.

5. Pneumatique selon l'une des revendications précédentes, **caractérisé en ce que** le centre de courbure de la partie bombée (9) de la bande de roulement se trouve dans la zone d'un plan radial (24) défini dans la transition entre la partie plane (8) de la bande de roulement et la partie bombée (9) de la bande de roulement.

6. Pneumatique selon l'une des revendications précédentes, **caractérisé en ce que** le talon de pneumatique (17) de la paroi latérale (6) associée à la partie bombée (9) de la bande de roulement est décalé radialement vers l'intérieur par rapport au talon de pneumatique (20) associé à la paroi latérale (5) adjacente à la partie plane (8) de la bande de roulement.

7. Pneumatique selon la revendication 6, **caractérisé en ce que** le décalage radial (24) des talons de pneumatique (17, 20) correspond à une valeur d'environ 1/6 à 1/12 de la largeur du pneumatique.

8. Pneumatique selon l'une ou l'autre des revendications 6 et 7, **caractérisé en ce que** le décalage radial (24) des talons (17, 20) du pneumatique correspond à une valeur d'environ 1/6 à 1/3 de la hauteur de pneumatique (19 ou 16) mesurée au-dessus d'un épaulement de jante (22 ou 23).

9. Pneumatique selon l'une des revendications précédentes, **caractérisé en ce que** la roue portant le pneumatique (4) comprend des épaulements de jante (18, 21) qui sont décalés radialement en correspondance des talons (17, 20) du pneumatique.

10. Pneumatique selon l'une des revendications précédentes, **caractérisé en ce que** la partie bombée (9) de la bande de roulement du pneumatique (1) présente un profil dit "d'hiver".

11. Pneumatique selon l'une des revendications précédentes, **caractérisé en ce que** la partie bombée (9) de la bande de roulement du pneumatique (4) est pourvue de clous (36).

12. Roue comportant un pneumatique selon l'une des revendications précédentes, **caractérisée en ce que** la roue (1) comprend un anneau d'appui (30) porté par sa jante (3), anneau qui se trouve dans la zone de la partie bombée (9) de la bande de roulement du pneumatique (4) et qui se trouve, lorsque la roue (1) n'est pas carrossée, à distance par rapport à la surface intérieure (34) du pneumatique.

13. Roue selon la revendication 12, **caractérisée en ce que** la distance entre la surface intérieure (34) du pneumatique et la surface de l'anneau d'appui (30) tournée vers celle-ci correspond, lorsque la roue (1) n'est pas carrossée, approximativement à la course de déformation du pneumatique (4) dans la zone de sa partie bombée (9) de la bande de roulement, course qui résulte par carrossage de la roue (1) pour la partie bombée (9) de la bande de roulement dans la zone d'appui au sol de la roue (1).

14. Roue selon l'une ou l'autre des revendications 12 et 13, **caractérisée en ce que** l'anneau d'appui (30) est réalisé partiellement élastique.

15. Roue selon la revendication 14, **caractérisée en ce que** l'anneau d'appui (30) présente une partie d'appui élastique voisine de la surface intérieure (34) du pneumatique.

16. Roue selon la revendication 11, **caractérisée en ce que** les clous (36) agencés dans la partie bombée (9) de la bande de roulement du pneumatique (4) présentent une position de repos en renfoncement par rapport à la surface extérieure de la partie bombée (9) de la bande de roulement et sont susceptibles d'être déployés jusque dans leur position de travail via l'anneau d'appui (30) lorsque la surface intérieure du pneumatique prend appui contre l'anneau d'appui (30).
